# EUROPÄISCHE PATENTSCHRIFT

(11) **EP 1 928 596 B1**
(45) Veröffentlichungstag und Bekanntmachung des Hinweises auf die Patenterteilung: **11.03.2009**
(21) Anmeldenummer: 06806816.2
(22) Anmeldetag: 26.09.2006
(51) Int. Cl.: B01J 19/00

(54) **MODULARES MIKROFLUIDIKSYSTEM**
MODULAR MICROFLUIDIC SYSTEM
SYSTEME MICROFLUIDIQUE MODULAIRE

(30) Priorität: 27.09.2005 DE 102005045811
(43) Veröffentlichungstag der Anmeldung: 11.06.2008
(73) Patentinhaber: SIEMENS AKTIENGESELLSCHAFT, 80333 München (DE)
(72) Erfinder: SCHNEEBERGER, Reinhold, 90556 Seukendorf (DE); LOHF, Astrid, 91056 Erlangen (DE); SENDNER, Robert, 90765 Fürth (DE)
(86) Internationale Anmeldenummer: PCT/EP2006/066725
(87) Internationale Veröffentlichungsnummer: WO 2007/036513

(56) Entgegenhaltungen:
- EP-A1- 0 952 359
- EP-A2- 1 203 954
- WO-A-20/05107937
- WO-A2-02/065221
- DE-C1- 19 954 855
- GB-A- 2 421 202

## Beschreibung

Die Erfindung betrifft ein modulares Mikrofluidiksystem, wie es gleichermaßen aus der WO 01/36085 A1, der WO 01/73823 A2 und aus der WO 02/065221 A2 bekannt ist. Die bekannten Mikrofluidiksysteme bestehen aus mehreren Modulen, die jeweils ein Mikrofluidikteil und eine zugehörige elektrische Steuereinheit enthalten und an ihren Rückseiten an einer Tragschiene in Reihe nebeneinander montierbar sind. Die Steuereinheiten der unterschiedlichen Module sind über einen elektrischen Leitungsbus und die Mikrofluidikteile über einen Fluidbus miteinander verbunden. Wie die WO 02/065221 A2 zeigt, kann der Fluidbus dadurch gebildet werden, dass die Mikrofluidikteile jeweils benachbarter Module über Verbindungskanäle enthaltende und die betreffenden Module überbrückende Verbindungsteile miteinander verbunden werden.

Ein modulares Mikrofluidiksystem ist auch Gegenstand der älteren deutschen Patentanmeldung mit dem amtlichen Aktenzeichen 10 2004 022 423.4 (WO 2005/107937).

Bei modularen Systemen besteht in der Regel die Anforderung, die einzelnen Module auf einfach Weise einfügen oder entfernen zu können. Darüber hinaus besteht bei modularen Fluidiksystemen, in denen beispielsweise chemische Reaktionen stattfinden sollen, das Erfordernis einer sicheren fluidischen Verbindung der Fluidikteile und der sie verbindenden Verbindungsteile.

Der Erfindung liegt daher die Aufgabe zugrunde, bei einem modularen Mikrofluidiksystem eine einfache, kostengünstige und sichere Befestigung von Mikrofluidikteilen und Verbindungsteilen und im Weiteren einen einfachen Austausch der Mikrofluidikteile und/oder ganzer Module zu ermöglichen.

Gemäß der Erfindung wird die Aufgabe durch ein modulares Mikrofluidiksystem mit folgenden Merkmalen gelöst:
- Module des Mikrofluidiksystems sind in einer Reihe nebeneinander angeordnet,
- jedes Modul weist ein plattenförmiges Mikrofluidikteil auf, das mit seiner Unterseite in einem örtlich begrenzten Bereich auf einer Auflagefläche des Moduls aufliegt und mittels eines lösbaren Befestigungselements gegen diese gepresst wird, wobei die Mikrofluidikteile jeweils benachbarter Module nebeneinander in einer Ebene liegen,
- jedes Mikrofluidikteil enthält ein Fluidkanalsystem mit Fluidanschlüssen, die auf der Oberseite des Mikrofluidikteils in den Randbereichen zu den potentiell benachbarten Mikrofluidikteilen angeordnet sind,
- die Fluidanschlüsse jeweils zweier benachbarter Mikrofluidikteile sind durch Verbindungskanäle in einem Verbindungsteil miteinander verbunden, das die beiden Mikrofluidikteile überbrückend auf deren Oberseiten in den Randbereichen aufliegt,
- in den gegenüberliegenden Randbereichen an den Unterseiten der beiden benachbarten Mikrofluidikteile liegt ein Klemmteil an, das im Bereich zwischen den beiden Mikrofluidikteilen über ein weiteres lösbares Befestigungselement mit dem Verbindungsteil verbunden ist und dieses gegen die Oberseiten der beiden Mikrofluidikteile presst.

Die Auflageflächen der nebeneinander angeordneten Module bilden zusammen eine Bezugsebene für die an den Modulen montierbaren Mikrofluidikteile, so dass diese in einer gemeinsamen Ebene nebeneinander zu liegen kommen. Da die plattenförmigen Mikrofluidikteile jeweils nur in einem örtlich begrenzten Bereich, vorzugsweise in der Plattenmitte, auf der Auflagefläche aufliegen, stehen die Ober- und Unterseiten der Mikrofluidikteile außerhalb dieser örtlich begrenzten Bereiche für den Anschluss der Verbindungsteile und, wie unten noch näher erläutert wird, für den Anschluss weiterer mikro- und/oder makrofluidischer Einheiten und/oder Fluidik-Zusatzeinheiten zur Verfügung. Das Anpressen des Mikrofluidikteils gegen die Auflagefläche erfolgt mittels des lösbaren Befestigungselements, vorzugsweise in Form einer Schraube, die auf einfache Weise von oben her durch eine Öffnung in dem Mikrofluidikteil hindurch in ein Gewinde in der Auflagefläche des Moduls eindrehbar ist.

Die Verbindungsteile für die Mikrofluidikteile jeweils benachbarter Module lassen sich einfach von oben auf die beiden Mikrofluidikteile aufsetzen, wobei sie in den benachbarten Randbereichen der beiden Mikrofluidikteile aufliegen und die dortigen Fluidanschlüsse über ihre Verbindungskanäle miteinander in einem je nach Ausführung des Verbindungsteils vorgegebenen Verbindungsmuster miteinander verbinden. Von unten her wird das Klemmteil gegen die benachbarten Mikrofluidikteile geführt und im Bereich zwischen den beiden Mikrofluidikteilen mit dem weiteren Befestigungselement befestigt, so dass das Verbindungsteil fest gegen die Oberseiten der beiden Mikrofluidikteile gepresst wird. Das weitere Befestigungselement besteht dabei bevorzugt aus einer Schraube, die auf einfache Weise von oben her durch eine Öffnung in dem Verbindungsteil hindurch in ein Gewinde in dem Klemmteil eindrehbar ist. Das Klemmteil weist im Bereich zwischen den beiden Mikrofluidikteilen vorzugsweise eine weitere Auflagefläche für das Verbindungsteil auf, die zumindest annähernd in der Ebene der Oberseiten der Mikrofluidikteile liegt, so dass das Verbindungsteil im montierten Zustand an dieser weiteren Auflagefläche anliegt und sich unter dem von dem Befestigungselement ausgeübten Druck nicht weiter durchbiegen oder brechen kann. Im Bereich der Fluidanschlüsse sind vorzugsweise elastische Dichtungsmittel, wie z. B. Dichtungsringe, angeordnet, die durch den Anpressdruck des Verbindungsteils zusammengepresst werden und die Fluidverbindungen nach außen abdichten. Außerdem lassen die elastischen Dichtungsmittel in einem gewissen Maß in vertikaler Richtung unterschiedliche Dickentoleranzen oder Lagetoleranzen (Höhenversatz) der jeweils benachbarten Mikrofluidikteile zu, ohne die Dichtigkeit des Systems zu gefährden. In diesem Zusammenhang erweist sich von Vorteil, dass die Verbindungsteile nicht an den Modulen befestigt sind, sondern dass sie die jeweils benachbarten Mikrofluidikteile freitragend verbinden. Dies lässt in vorteilhafter Weise auch Lagetoleranzen der jeweils benachbarten Mikrofluidikteile in horizontaler Richtung zu.

Das Mikrofluidiksystem weist aufgrund seiner erfindungsgemäßen Merkmale folgende weitere Vorteile auf:

Die Mikrofluidikteile können in den Modulen eingebaut werden bevor diese zu dem Mikrofluidiksystem aneinandergereiht und die Verbindungsteile zwischen jeweils benachbarten Modulen montiert werden. Wenn ein Modul in dem System ausgewechselt werden soll, muss daher auch nicht zuerst das Mikrofluidikteil aus dem betreffenden Modul entfernt werden. Umgekehrt können Mikrofluidikteile an den Modulen des Mikrofluidiksystems ausgetauscht werden, ohne dass die Module aus dem Mikrofluidiksystem entfernt werden müssen.

Die Verbindungsteile zwischen den jeweils benachbarten Mikrofluidikteilen können auf einfachste Weise eingefügt, entfernt oder ausgetauscht werden, indem das weitere Befestigungselement zwischen dem Verbindungsteil und dem Klemmteil gelockert wird, so dass sich das Verbindungsteil zusammen mit dem Klemmteil von vorn oder hinten in den Bereich zwischen den beiden Mikrofluidikteilen einschieben oder daraus herausschieben lässt.

Um die Montage der Mikrofluidikteile an dem Modulen zu erleichtern und Montagefehler zu vermeiden, weisen die Mikrofluidikteile und Module vorzugsweise Positioniermittel, beispielsweise in Form von Stift-Loch-Kombinationen, zur Ausrichtung der Mikrofluidikteile in Bezug auf die Module auf. Entsprechend können auch die Verbindungsteile und die von ihnen jeweils zu überbrückenden benachbarten Mikrofluidikteile weitere Positioniermittel zur Ausrichtung des jeweiligen Verbindungsteils in Bezug auf die beiden Mikrofluidikteile aufweisen. Dabei sind die Positioniermittel bzw. weiteren Positioniermittel vorzugsweise entsprechend einer Codierung angeordnet, die nur vorgegebene Kombinationen von Mikrofluidikteil und Modul bzw. Verbindungsteil und Mikrofluidikteil zulässt. Wie oben bereits erläutert, lässt die freitragende Verbindung der jeweils benachbarten Mikrofluidikteile Lagetoleranzen der Mikrofluidik- und Verbindungsteile in horizontaler Richtung zu, so dass auch die Positioniermittel so ausgebildet oder angeordnet sein können, dass sie diese Toleranzen zulassen.

Da, wie oben bereits erwähnt, die plattenförmigen Mikrofluidikteile jeweils nur in örtlich begrenzten Bereichen, vorzugsweise den Plattenmitten, auf den Auflageflächen der Module aufliegen, stehen die Ober- und Unterseiten der Mikrofluidikteile außerhalb dieser örtlich begrenzten Bereiche für den Anschluss der Verbindungsteile und weiterer mikro- und/oder makrofluidischer Einheiten und/oder Fluidik-Zusatzeinheiten zur Verfügung. Daher ist in vorteilhafter Weise vorgesehen, dass in zumindest einem der Module mindestens eine weitere mikro- und/oder makrofluidische Einheit unterhalb des Mikrofluidikteils derart montierbar ist, dass weitere Fluidanschlüsse der mindestens einen weiteren mikro- und/oder mikrofluidischen Einheit außerhalb des örtlich begrenzten Bereichs gegen die Unterseite des Mikrofluidikteils drücken und dabei mit dort vorhandenen zusätzlichen Fluidanschlüssen des Mikrofluidikteils verbunden sind. Bei den weiteren mikro- und/oder makrofluidischen Einheiten kann es sich beispielsweise um Pumpen, Ventile und Mess- oder Analysengeräte handeln, die aufgrund ihrer Größe oder aus sonstigen Gründen nicht in die Mikrofluidikeinheiten integriert sind, aber ansonsten wesentliche Bestandteile der Module sind. Die Module können daher auf ihren Vorderseiten Türen oder abnehmbare Verkleidungen aufweisen, um einen Zugang in das Innere der Module zu ermöglichen und die weiteren mikro- und/oder makrofluidischen Einheiten von unten her in Richtung auf die Mikrofluidikteile montieren zu können.

Da die weiteren mikro- und/oder makrofluidischen Einheiten von unten her gegen die Mikrofluidikteile drücken und diese daher einseitig belasten können, kann vorgesehen werden, dass bei einer einseitigen Anordnung der weiteren Fluidanschlüsse der mindestens einen weiteren mikro- und/oder makrofluidischen Einheit in Bezug auf die Auflagefläche des jeweiligen Moduls dieses in etwa demselben Abstand zu der Auflagefläche eine Hilfsauflagefläche auf der gegenüberliegenden Seite aufweist, so dass dadurch die mechanische Belastung des Mikrofluidikteils symmetrisch wird.

Die Auflagefläche für das Mikrofluidikteil kann unmittelbar an dem Gehäuse des Moduls ausgebildet sein. Vorzugsweise ist sie aber an der Oberseite einer Adapterplatte ausgebildet, die austauschbar an einem Gehäuse des Moduls befestigt ist und an deren Unterseite die mindestens eine weitere mikro-und/oder makrofluidische Einheit montierbar ist. Auf diese Weise können unterschiedliche Adapterplatten für unterschiedliche daran montierbare weitere mikro- und/oder makrofluidische Einheiten vorgesehen werden. Die Adapterplatten können Öffnungen enthalten, durch die hindurch die weiteren Fluidanschlüsse der weiteren mikro- und/oder makrofluidischen Einheiten bis an die Unterseiten der Mikrofluidikteile ragen. Vorzugsweise sind an den Adapterplatten zwischen den Mikrofluidikteilen und den weiteren mikro- und/oder makrofluidischen Einheiten Fluidanschlussadapter angeordnet, an deren bis an die Unterseite der Mikrofluidikteile ragenden Oberseiten die weiteren Fluidanschlüsse ausgebildet sind und an deren Unterseite die weiteren mikro- und/oder makrofluidischen Einheiten fluidisch anschließbar sind. Die Fluidanschlussadapter sind leicht austauschbar und ermöglichen es, unterschiedliche weitere mikro- und/oder makrofluidische Einheiten mit den Mikrofluidikteilen fluidisch zu verbinden.

Um die Flexibilität des modularen Mikrofluidiksystems für den Anwender weiter zu erhöhen, können einzelne Verbindungsteile auf ihrer Oberseite noch weitere Fluidanschlüsse und Befestigungsmittel zum Anschluss von Fluidik-Zusatzeinheiten aufweisen. Bei den Fluidik-Zusatzeinheiten kann es sich um Rückschlagventile, Manometer, Wärmetauschereinheiten, optische Sonden zur In-Line-Analytik usw. handeln, die von dem Anwender an verschiedenen Stellen des Mikrofluidiksystems in dieses eingebunden werden können. Damit ist z. B. auch die Möglichkeit gegeben, an verschiedenen Stellen des Mikrofluidiksystems weitere Fluide, z. B. Edukte, einzuspeisen oder Fluide zu entnehmen.

Um an den Endmodulen, d. h. dem Anfangs- und Endmodul, des Mikrofluidiksystems Fluide zu- bzw. ableiten zu können, ist für die Endmodule jeweils ein Fluidanschlussteil zum Anschluss von externen Fluidleitungen vorgesehen, das mittels des weiteren lösbaren Befestigungselements an der Unterseite des Verbindungsteils befestigbar ist und dabei die Verbindungskanäle in dem Verbindungsteil mit den externen Fluidleitungen verbindet. Damit sind keine besonderen Endmodule erforderlich, weil jedes Modul als Endmodul verwendet werden kann.

Zum Schutz der Mikrofluidikteile können diese jeweils mit einer die Randbereiche unbedeckt lassenden und an dem jeweiligen Modul lösbar befestigten Abdeckhaube von oben abgedeckt werden, wobei vorzugsweise die Verbindungsteile jeweils mittels einer zwischen den Abdeckhauben benachbarter Module einfügbaren weiteren Abdeckhaube abdeckbar sind. Einzelne Module des Mikrofluidiksystems können daher eingebaut oder ausgetauscht werden, ohne dass die Abdeckhaube über dem jeweiligen Mikrofluidikteil entfernt werden muss, so dass das Mikrofluidikteil bei Arbeiten an den Verbindungsteilen geschützt ist. Um die Montage der oben bereits erwähnten Fluidik-Zusatzeinheiten auf den Verbindungsteilen zu ermöglichen, können die weiteren Abdeckhauben oberhalb der zum Anschluss von Fluidik-Zusatzeinheiten auf den Verbindungsteilen vorgesehenen Bereiche jeweils ein, beispielsweise durch Herausbrechen, entfernbares Abdeckteil aufweist.

Zur weiteren Erläuterung der Erfindung wird im Folgenden auf die Figuren der Zeichnung Bezug genommen; im Einzelnen zeigen:
- Figur 1: ein Ausführungsbeispiel des erfindungsgemäßen modularen Mikrofluidiksystems,
- Figur 2: den oberen Teil eines der Module mit einem Mikrofluidikteil und Verbindungsteilen,
- Figur 3: den oberen Teil eines der Module mit einer Abdeckhaube für das Mikrofluidikteil,
- Figur 4: den oberen Teil eines der Module mit einer weiteren Abdeckhaube für eines der Verbindungsteile,
- Figur 5: den oberen Teil eines der Module mit einer auf dem Verbindungsteil montierten Fluidik-Zusatzeinheit,
- Figur 6: ein Beispiel für das plattenförmige Mikrofluidikteil,
- Figur 7: ein Beispiel für Montage der Mikrofluidikteile in den Modulen und die fluidische Verbindung der Mikrofluidikteile zweier benachbarter Module mittels des Verbindungsteils,
- Figur 8: den oberen Teil eines Endmoduls in einem Schnitt längs der Modulreihe,
- Figur 9: ein Beispiel für die fluidische Verbindung zweier Module bei einem Höhenversatz der Module,
- Figur 10: ein Beispiel für auf dem Verbindungsteil montierbare Fluidik-Zusatzeinheiten und die
- Figuren 11, 12 und 13: verschiedene Beispiele für Endmodule

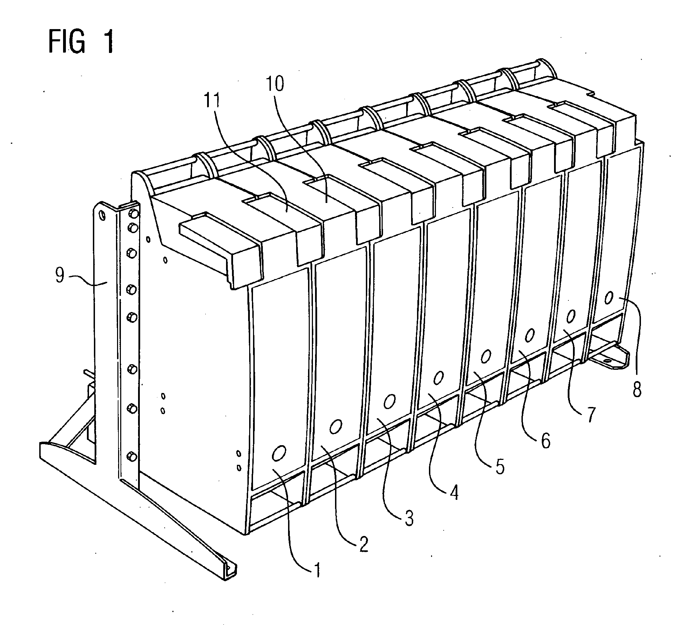

Figur 1 zeigt ein Mikrofluidiksystem mit Modulen 1 bis 8, die in einer Reihe nebeneinander angeordnet und rückseitig an einem Trägerrahmen 9 gehalten sind. Dabei bilden die Module 1 und 8 die Endmodule, d. h. das Anfangs- und Endmodul, des Mikrofluidiksystems. Jedes Modul 1 bis 8 enthält ein Mikrofluidikteil und eine zugehörige elektrische Steuereinheit. Die Steuereinheiten der unterschiedlichen Module sind über einen elektrischen Leitungsbus und die Mikrofluidikteile über einen Fluidbus miteinander verbunden. Der elektrische Leitungsbus verläuft in dem Trägerrahmen 9, wobei die Module 1 bis 8 über rückseitige Steckverbinder mit dem Leitungsbus lösbar verbunden sind. Der Fluidbus wird durch Verbindungskanäle enthaltende Verbindungsteile gebildet, die die Mikrofluidikteile jeweils benachbarter Module 1 bis 8 fluidisch miteinander verbinden. Die Mikrofluidikteile sind im Bereich der Moduloberseiten angeordnet und im normalen Betrieb des Mikrofluidiksystems durch lösbar an den Modulen 1 bis 8 gehaltene Abdeckhauben 10 abgedeckt. Die die Mikrofluidikteile jeweils benachbarter Module 1 bis 8 verbindenden Verbindungsteile sind durch weitere Abdeckhauben 11 abgedeckt.

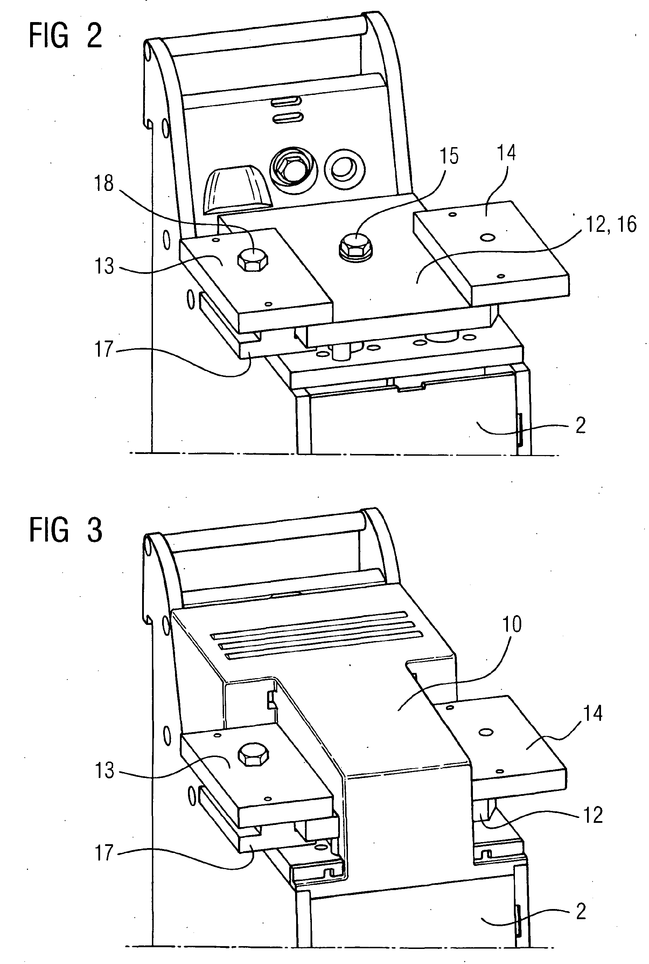

Figur 2 zeigt den oberen Teil eines der Module, z. B. 2, bei abgenommenen Abdeckhauben 10, 11, so dass das Mikrofluidikteil 12 und die Verbindungsteile 13 und 14 zu den benachbarten Modulen 1 und 3 hin sichtbar sind. Das plattenförmige Mikrofluidikteil 12 liegt mit seiner Unterseite in einem örtlich begrenzten Bereich der Plattenmitte auf einer Auflagefläche des Moduls 2 auf und wird mittels eines lösbaren Befestigungselements 15 in Form einer Schraube gegen diese gepresst. Das Mikrofluidikteil 12 enthält ein Fluidkanalsystem mit Fluidanschlüssen, die auf der Oberseite 16 des Mikrofluidikteils 12 in den Randbereichen zu den Mikrofluidikteilen der benachbarten Module 1 und 3 hin angeordnet sind. Die Fluidanschlüsse jeweils zweier benachbarter Mikrofluidikteile, z. B. 12 und das entsprechende Mikrofluidikteil des Moduls 1, sind durch die Verbindungskanäle in dem Verbindungsteil, z. B. 13, miteinander verbunden, das die beiden Mikrofluidikteile überbrückend auf deren Oberseiten in den Randbereichen aufliegt. In den gegenüberliegenden Randbereichen an den Unterseiten der beiden benachbarten Mikrofluidikteile liegt ein Klemmteil 17 an, das im Bereich zwischen den beiden Mikrofluidikteilen über ein weiteres lösbares Befestigungselement 18, ebenfalls in Form einer Schraube, mit dem Verbindungsteil 13 verbunden ist und dieses gegen die Oberseiten der beiden Mikrofluidikteile presst.

Figur 3 zeigt den oberen Teil des Moduls 2 mit aufgesetzter Abdeckhaube 10 zum Schutz des Mikrofluidikteils 12. Die Abdeckhaube 12 lässt dabei die Randbereiche des Mikrofluidikteils 12 unbedeckt, so dass die Verbindungsteile 12 und 13 ohne Entfernen der Abdeckhaube 10 montiert oder demontiert werden können.

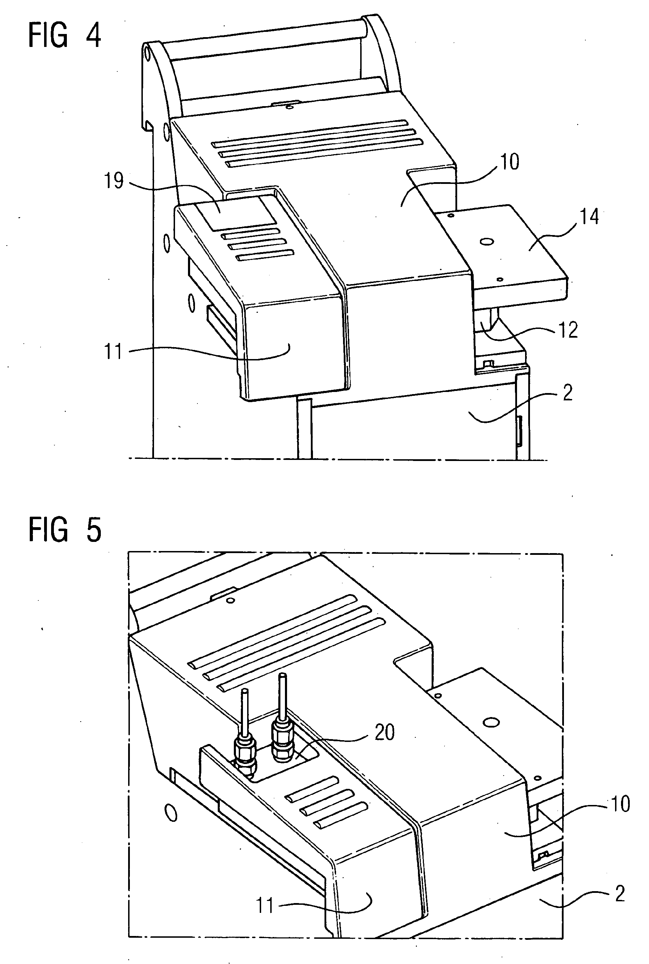

Figur 4 zeigt den oberen Teil des Moduls 2, wobei sowohl die Abdeckhaube 10 zum Schutz des Mikrofluidikteils 12 als auch die weitere Abdeckhaube 11 zum Schutz des Verbindungsteils 13 aufgesetzt sind. Die weitere Abdeckhaube 11 weist ein, hier durch Herausbrechen, entfernbares Abdeckteil 19 auf, um eine Fluidik-Zusatzeinheit auf dem Verbindungsteil 13 anbringen zu können.

Figur 5 zeigt den oberen Teil des Moduls 2 mit der auf dem Verbindungsteil 13 angebrachten Fluidik-Zusatzeinheit 20.

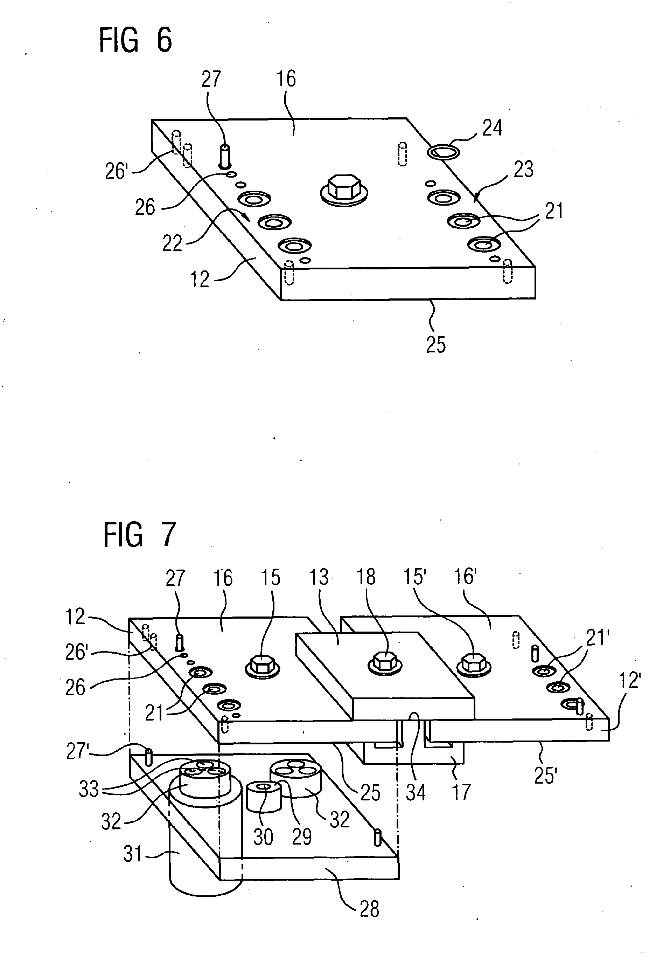

Figur 6 zeigt ein Beispiel für das plattenförmige Mikrofluidikteil 12, das als Einzelplatte oder in Form eines Plattenverbunds aus Stahl, Glas, Silizium oder einem anderen geeigneten Material ausgebildet sein kann. Innerhalb der Platte bzw. Platten verlaufen Fluidkanäle eines Fluidkanalsystems im Wesentlichen parallel zu den beiden großflächigen Plattenhauptseiten und sind senkrecht dazu mit den Fluidanschlüssen 21 in den Randbereichen 22 und 23 der Oberseite 16 des Mikrofluidikteils 12 verbunden. Die Fluidanschlüsse 21 enthalten Vertiefungen zur Aufnahme von elastischen Dichtungsmitteln 24 in Form von Dichtungsringen. Auf der Oberseite 16 und der Unterseite 25 des Mikrofluidikteils 12 sind Positioniermittel in Form von Bohrungen 26 und 26' zur Aufnahme von Fangstiften 27 und 27' vorgesehen, die zur Ausrichtung des Mikrofluidikteils 12 in Bezug auf das aufnehmende Modul bzw. zur Ausrichtung der Verbindungsteile in Bezug auf das Mikrofluidikteil 12 dienen. Dabei sind die Positioniermittel 26, 26', 27. 27' vorzugsweise entsprechend einer vorgegebenen Codierung ausgebildet oder angeordnet, die nur vorgegebene Kombinationen von Mikrofluidikteil und Modul bzw. Verbindungsteil und Mikrofluidikteil zulässt.

Figur 7 zeigt eine an der Moduloberseite befestigbare Adapterplatte 28, in deren Mitte die Auflagefläche 29 für das Mikrofluidikteil 12 ausgebildet ist. Die Auflagefläche 29 enthält ein Innengewinde, in das die Schraube 15 eindrehbar ist, so dass das Mikrofluidikteil 12 mittels der Schraube 15 im Bereich der Plattenmitte gegen die Auflagefläche 29 gepresst wird. Die Loch-Stift-Kombinationen 26, 27' sorgen dafür, dass einerseits nur ein für das betreffende Modul zulässiges Mikrofluidikteil 12 auf der Adapterplatte 28 montierbar ist und dass andererseits das Mikrofluidikteil 12 in seiner Lage korrekt ausgerichtet wird. An der Unterseite der Adapterplatte 28 ist mindestens eine weitere mikro- und/oder makrofluidische Einheit 31 montierbar. Bei dem hier gezeigten Beispiel enthält das Mikrofluidikteil 12 an seiner Unterseite 25 zusätzliche Fluidanschlüsse, die zum Anschluss mindestens einer weiteren mikro- oder makrofluidischen Einheit 31 dienen. Bei diesen weiteren mikro- oder makrofluidischen Einheiten 31 kann es sich um Pumpen, Ventile, Mess- oder Analysengeräte usw. handeln, die aufgrund ihrer Größe oder aus sonstigen Gründen nicht in die Mikrofluidikeinheiten integriert sind, aber ansonsten wesentliche Bestandteile der Module sind. Die weiteren mikro- oder makrofluidischen Einheiten 31 sind innerhalb des Moduls in einem Raum unter der Adapterplatte 28 untergebracht und über Fluidanschlussadapter 32 mit den zusätzlichen Fluidanschlüssen an der Unterseite 25 des Mikrofluidikteils 12 verbunden. Die Fluidanschlussadapter 32 sind leicht austauschbar an der Adapterplatte 28 angeordnet und weisen an ihren Oberseiten, die bis an die Unterseite 25 des Mikrofluidikteils 12 ragen, die Fluidanschlüssen 33 der weiteren mikro- oder makrofluidischen Einheiten 31 zum Anschluss an das Mikrofluidikteil 12 auf. Für unterschiedliche weitere mikro- und/oder makrofluidische Einheiten 31 können unterschiedliche Adapterplatten 28 vorgesehen werden.

Figur 7 zeigt weiterhin nochmals die fluidische Verbindung der Mikrofluidikteile 12 und 12' zweier benachbarter Module mittels des Verbindungsteils 13, welches die beiden Mikrofluidikteile 12 und 12' überbrückt und dabei auf deren Oberseiten 16 und 16' in den die Fluidanschlüsse 21, 21' enthaltenden und einander benachbarten Randbereichen aufliegt. In den gegenüberliegenden Randbereichen an den Unterseiten 25 und 25' der beiden Mikrofluidikteile 12, 12' liegt das Klemmteil 17 an, das im Bereich zwischen den beiden Mikrofluidikteilen 12, 12' über die weitere Schraube 18 mit dem Verbindungsteil 13 verbunden ist und dieses gegen die Oberseiten 16 und 16' der beiden Mikrofluidikteile 12 und 12' presst. Das Klemmteil 17 weist im Bereich zwischen den beiden Mikrofluidikteilen 12 und 12' eine weitere Auflagefläche 34 für das Verbindungsteil 13 auf, die zumindest annähernd in der Ebene der Oberseiten 16 und 16' der Mikrofluidikteile 12 und 12' liegt, so dass das Verbindungsteil 13 im montierten Zustand an dieser weiteren Auflagefläche 34 anliegt und sich unter dem von der Schraube 18 ausgeübten Druck nicht weiter durchbiegen oder brechen kann.

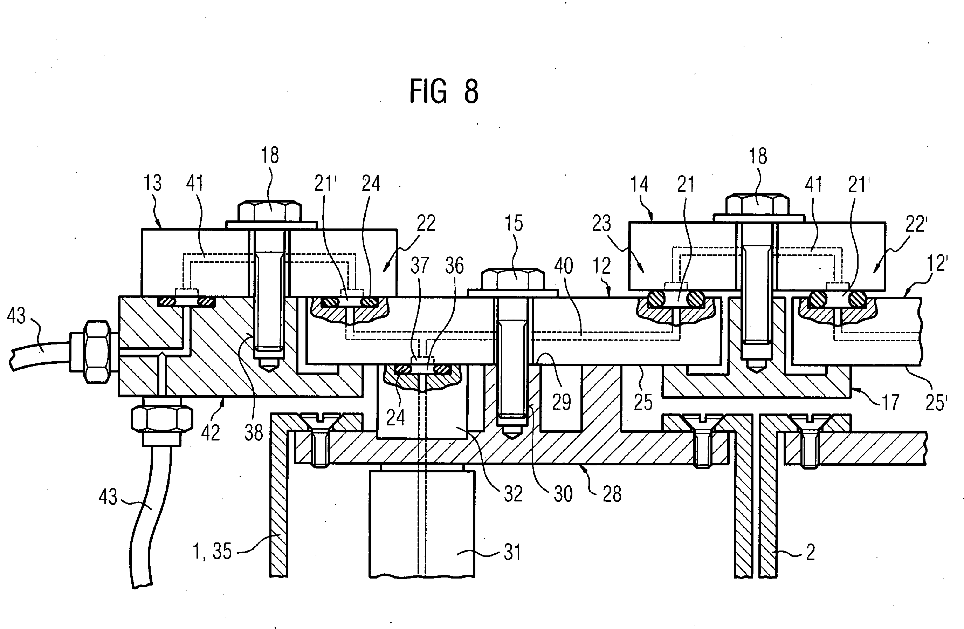

Figur 8 zeigt den oberen Teil des Endmoduls 1 und teilweise das Modul 2 in einem Schnitt längs zur Modulreihe. Im oberen Bereich des Modulgehäuses 35 ist die Adapterplatte 28 montiert, die auf ihrer Oberseite einen Fluidanschlussadapter 32 für eine weitere mikro- oder makrofluidische Einheit 31 trägt. Die Einheit 31 ist in dem Gehäuse 35 montiert und von unten mit dem Fluidanschlussadapter 32 fluidisch verbunden. An der Oberseite des Fluidanschlussadapters 32 sind die weiteren Fluidanschlüsse 36 der Einheit 31 zum Anschluss an das Mikrofluidikteil 12 ausgeformt. Das Mikrofluidikteil 12 liegt mit seiner Unterseite 25 im Bereich der Plattenmitte auf der dafür an der Adapterplatte 28 ausgebildeten Auflagefläche 29 auf, die das Innengewinde 30 zum Eindrehen der Schraube 15 enthält, so dass das Mikrofluidikteil 12 mittels der Schraube 15 im Bereich der Plattenmitte gegen die Auflagefläche 29 gepresst wird. Die Adapterplatte 20 weist weiterhin eine Hilfsauflagefläche 39 für das Mikrofluidikteil 12 auf, die in Bezug auf die Plattenmitte symmetrisch zu dem Fluidanschlussadapter 32 angeordnet ist.

Das Mikrofluidikteil 12 enthält in seinem Inneren Fluidkanäle 40, die je nach Funktion des Moduls 1 beispielsweise einen Reaktor, einen Mischer oder eine Verweilstrecke für Fluide oder mehrere solche Funktionseinheiten bilden und parallel zu der Ober- und Unterseite 16 bzw. 25 des planaren Mikrofluidikteils 12 verlaufen. Diejenigen Fluidkanäle 40, die zur Verbindung mit Fluidkanälen in den Mikrofluidikteilen potentiell benachbarter Module, hier z. B. das Modul 2, vorgesehen sind, münden in den Fluidanschlüssen 21, die auf der Oberseite 16 des Mikrofluidikteils 12 in den Randbereichen 22 und 23 zu den potentiellen Nachbarmodulen enthalten sind. Zusätzliche Fluidanschlüsse 37 auf der Unterseite 25.des Mikrofluidikteils 12 dienen zum Anschluss der weiteren mikro- oder makrofluidischen Einheit 31.

Die Fluidanschlüsse 21, 21' der benachbarten Mikrofluidikteile 12 und 12' sind durch die Verbindungskanäle 41 in dem Verbindungsteil 14 miteinander verbunden, das die beiden Mikrofluidikteile überbrückt und dabei auf deren Oberseiten in den Randbereichen 23, 22' aufliegt. In denselben Randbereichen 23, 22' liegt an den Unterseiten 25, 25' der beiden Mikrofluidikteile 12 und 12' das Klemmteil 17 an, das im Bereich zwischen den beiden Mikrofluidikteilen 12 und 12' über die weitere Schraube 18 mit dem Verbindungsteil 14 verbunden ist und dieses gegen die Oberseiten der beiden Mikrofluidikteile 12 und 12' presst. Das Verbindungsteil 14 ist ebenfalls als Platte oder Plattenverbund und vorzugsweise aus demselben Material wie die Mikrofluidikteile 12, 12' ausgebildet, so dass die Bildung von elektrischen Lokalelementen verhindert wird.

Die im Bereich der Fluidanschlüsse 21, 21' in Vertiefungen angeordneten elastischen Dichtungsringe 24 werden durch den Anpressdruck des Verbindungsteils 14 zusammengepresst und dichten die Fluidverbindungen nach außen ab. Dabei lassen die Dichtungsringe 24 in einem gewissen Maß in vertikaler Richtung unterschiedliche Dickentoleranzen oder Lagetoleranzen (Höhenversatz) der jeweils benachbarten Mikrofluidikteile 12, 12' zu, ohne die Dichtigkeit des Systems zu gefährden.

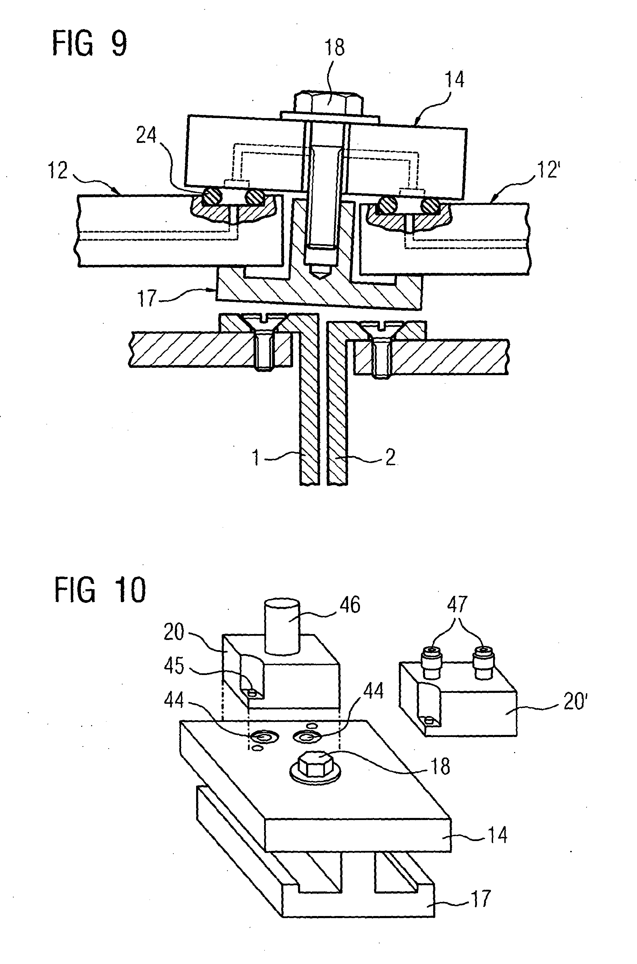

Figur 9 zeigt ein Beispiel für die fluidische Verbindung der Module 1 und 2 bei einem Höhenversatz der Module 1 und 2.

Wie Figur 8 weiterhin zeigt, ist für das Endmodul 1 ein Fluidanschlussteil 42 zum Anschluss von externen Fluidleitungen 43 vorgesehen, um an dem Endmodul 1 des Mikrofluidiksystems Fluide zu- bzw. ableiten zu können. Das Fluidanschlussteil 42 ist anstelle eines Klemmteils 17 mittels der weiteren Schraube 18 an der Unterseite des Verbindungsteils 13 befestigt und verbindet dabei die Verbindungskanäle 41 in dem Verbindungsteil 13 mit den externen Fluidleitungen 43.

Figur 10 zeigt beispielhaft zwei auf dem Verbindungsteil 14 montierbare Fluidik-Zusatzeinheiten 20 und 20'. Dazu weist das Verbindungsteil 14 auf seiner Oberseite noch weitere Fluidanschlüsse 44 und Befestigungsmittel 45 zum Anschluss der Fluidik-Zusatzeinheiten 20, 20' auf. Bei den Zusatzeinheiten 20, 20' kann es sich um Rückschlagventile, Manometer, Wärmetauschereinheiten, optische Sonden zur In-Line-Analytik usw. handeln, die von dem Anwender an verschiedenen Stellen des Mikrofluidiksystems in dieses eingebunden werden können. Damit ist z. B. auch die Möglichkeit gegeben, an verschiedenen Stellen des Mikrofluidiksystems weitere Fluide, z. B. Edukte, einzuspeisen oder Fluide zu entnehmen. Die Fluidik-Zusatzeinheit 20 weist beispielsweise eine optische Sonde 46 zur Flüssigkeitsanalyse auf, an der ein Fluid aus dem Mikrofluidiksystem im Bypass vorbeigeführt wird. Die Fluidik-Zusatzeinheit 20' ermöglicht es beispielsweise über die Anschlüsse 47 einen externen Wärmetauscher anzuschließen, um von dem Verbindungsteil von einem Modul in das nächste Modul überführten Fluide über die Möglichkeiten des Mikrofluidiksystems hinaus zu erwärmen oder zu kühlen.

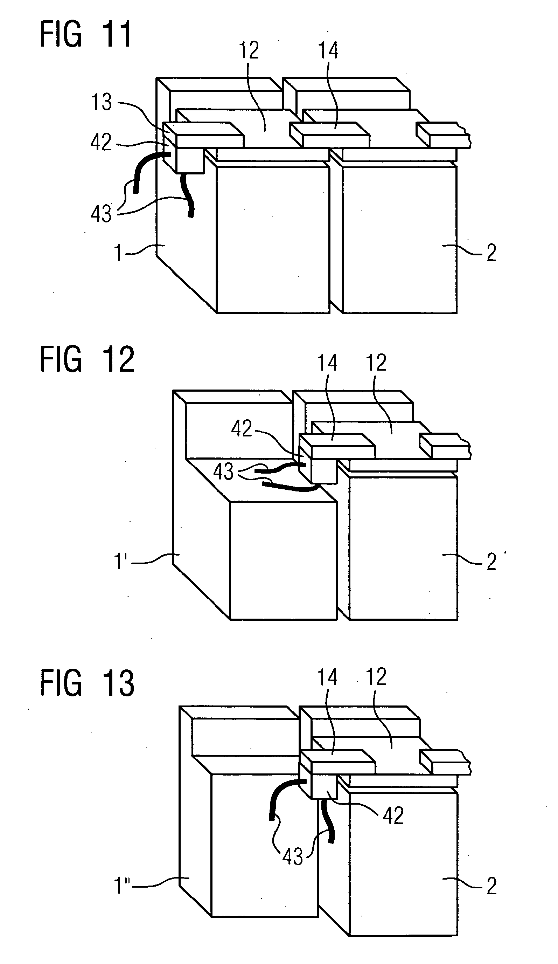

Die Figuren 11, 12 und 13 zeigen verschiedene Beispiele für Endmodule 1, 1' und 1", die selbst keine unmittelbare Mikrofluidikfunktion ausüben und dementsprechend kein entsprechendes Mikrofluidikteil aufweisen. Es handelt sich dabei beispielsweise um Elektronikmodule, Kryostaten, Waagen oder Analysensysteme, die in das Mikrofluidiksystem eingebaut und über den allen Modulen 1 bis 8 (vgl. Figur 1) gemeinsamen elektrischen Leitungsbus in die Automatisierung des Mikrofluidiksystems eingebunden werden sollen. Um zur Ver- und Entsorgung des Mikrofluidiksystems mit Fluiden an dem Endmodul ein Fluidanschlussteil 42 zum Anschluss externer Fluidleitungen 43 anbringen zu können, hat bei dem Ausführungsbeispiel nach Figur 11 das Mikrofluidikteil 12 an dem Endmodul 1 lediglich die Funktion, die Fluide zwischen den Verbindungsteilen 13 und 14 zu führen. Bei dem Beispiel nach Figur 12 ist die Bauhöhe des Endmoduls 1' und bei dem Beispiel nach Figur 13 die Bautiefe des Endmoduls 1" soweit reduziert, dass das Fluidanschlussteil 42 mit den externen Fluidleitungen 43 an dem Modul 2 angebracht werden können, welches in der Reihe von Modulen mit Mikrofluidikfunktion die Funktion eines Endmoduls hat.

## Patentansprüche

1. Modulares Mikrofluidiksystem mit folgenden Merkmalen:
- Module (1 bis 8) des Mikrofluidiksystems sind in einer Reihe nebeneinander angeordnet,
- jedes Modul (1 bis 8) weist ein plattenförmiges Mikrofluidikteil (12) auf, das mit seiner Unterseite (25) in einem örtlich begrenzten Bereich auf einer Auflagefläche (29) des Moduls (1 bis 8) aufliegt und mittels eines lösbaren Befestigungselements (15) gegen diese gepresst wird, wobei die Mikrofluidikteile (12, 12') jeweils benachbarter Module (1 bis 8) nebeneinander in einer Ebene liegen,
- jedes Mikrofluidikteil (12) enthält ein Fluidkanalsystem (40) mit Fluidanschlüssen (21), die auf der Oberseite (16) des Mikrofluidikteils (12) in Randbereichen (22, 23) zu den potentiell benachbarten Mikrofluidikteilen (1 bis 8) angeordnet sind,
- die Fluidanschlüsse (21) jeweils zweier benachbarter Mikrofluidikteile (12, 12') sind durch Verbindungskanäle (41) in einem Verbindungsteil (13) miteinander verbunden, das die beiden Mikrofluidikteile (12, 12') überbrückend auf deren Oberseiten (16, 16') in den Randbereichen (22, 23) aufliegt,
- in den gegenüberliegenden Randbereichen an den Unterseiten (25, 25') der beiden benachbarten Mikrofluidikteile (12, 12') liegt ein Klemmteil (17) an, das im Bereich zwischen den beiden Mikrofluidikteilen (12, 12') über ein weiteres lösbares Befestigungselement (18) mit dem Verbindungsteil (13) verbunden ist und dieses gegen die Oberseiten (16, 16') der beiden Mikrofluidikteile (12, 12') presst.

2. Modulares Mikrofluidiksystem nach Anspruch 1, **dadurch gekennzeichnet, dass** das Befestigungselement (15) aus einer Schraube besteht, die durch eine Öffnung in dem Mikrofluidikteil (12) hindurch in ein Gewinde (30) in der Auflagefläche (29) des Moduls (1 bis 8) eindrehbar ist.

3. Modulares Mikrofluidiksystem nach Anspruch 1 oder 2, **dadurch gekennzeichnet, dass** das weitere Befestigungselement (18) aus einer Schraube besteht, die durch eine Öffnung in dem Verbindungsteil (13) hindurch in ein Gewinde (38) in dem Klemmteil (17) eindrehbar ist.

4. Modulares Mikrofluidiksystem einem der vorangehenden Ansprüche, **dadurch gekennzeichnet, dass** das Klemmteil (17) im Bereich zwischen den beiden Mikrofluidikteilen (12, 12') eine weitere Auflagefläche (34) für das Verbindungsteil (13) aufweist, die zumindest annähernd in der Ebene der Oberseiten (16, 16') der Mikrofluidikteile (12, 12') liegt.

5. Modulares Mikrofluidiksystem nach einem der vorangehenden Ansprüche, **dadurch gekennzeichnet, dass** das Mikrofluidikteil (12) und das Modul (1 bis 8) Positioniermittel (26', 27') zur Ausrichtung des Mikrofluidikteils (12) in Bezug auf das Modul (1 bis 8) aufweisen.

6. Modulares Mikrofluidiksystem nach einem der vorangehenden Ansprüche, **dadurch gekennzeichnet, dass** das Verbindungsteil (13) und die von ihm zu überbrückenden benachbarten Mikrofluidikteile (12, 12') weitere Positioniermittel (26, 27) zur Ausrichtung des Verbindungsteils (13) in Bezug auf die beiden Mikrofluidikteile (12, 12') aufweisen.

7. Modulares Mikrofluidiksystem nach Anspruch 5 oder 6, **dadurch gekennzeichnet, dass** die Positioniermittel (26, 27) und/oder weiteren Positioniermittel (26, 27) entsprechend einer Codierung ausgebildet und/oder angeordnet sind, die nur vorgegebene Kombinationen von Mikrofluidikteil (12) und Modul (1 bis 8) bzw. Verbindungsteil (13) und Mikrofluidikteil (12) zulässt.

8. Modulares Mikrofluidiksystem nach einem der vorangehenden Ansprüche, **dadurch gekennzeichnet, dass** in zumindest einem der Module (1 bis 8) mindestens eine weitere mikro- und/oder makrofluidische Einheit (31) unterhalb des Mikrofluidikteils (12) derart montierbar ist, dass weitere Fluidanschlüsse (33) der mindestens einen weiteren mikro- und/oder makrofluidischen Einheit (31) außerhalb des örtlich begrenzten Bereichs gegen die Unterseite (25) des Mikrofluidikteils (12) drücken und dabei mit dort vorhandenen zusätzlichen Fluidanschlüssen (37) des Mikrofluidikteils (12) verbunden sind

9. Modulares Mikrofluidiksystem nach Anspruch 8, **dadurch gekennzeichnet, dass** bei einer einseitigen Anordnung der weiteren Fluidanschlüsse (33) der mindestens einen weiteren mikro-und/oder makrofluidischen Einheit (31) in Bezug auf die Auflagefläche (29) des jeweiligen Moduls (1 bis 8) dieses in etwa demselben Abstand zu der Auflagefläche (29) eine Hilfsauflagefläche (39) auf der gegenüberliegenden Seite aufweist.

10. Modulares Mikrofluidiksystem nach Anspruch 8 oder 9, **dadurch gekennzeichnet, dass** die Auflagefläche (29) für das Mikrofluidikteil (12) an der Oberseite einer Adapterplatte (28) ausgebildet ist, die austauschbar an einem Gehäuse (35) des Moduls (1 bis 8) befestigt ist und an deren Unterseite die mindestens eine weitere mikro- und/oder makrofluidische Einheit (31) montierbar ist.

11. Modulares Mikrofluidiksystem nach Anspruch 10, **dadurch gekennzeichnet, dass** die Adapterplatte (28) Öffnungen enthält, durch die hindurch die weiteren Fluidanschlüsse der mindestens einen weiteren mikro- und/oder makrofluidischen Einheit (31) bis an die Unterseite (25) des Mikrofluidikteils (12) ragen.

12. Modulares Mikrofluidiksystem nach Anspruch 10, **dadurch gekennzeichnet, dass** an der Adapterplatte (28) zwischen dem Mikrofluidikteil (12) und der mindestens eine weiteren mikro-und/oder makrofluidischen Einheit (31) jeweils ein Fluidanschlussadapter (32) angeordnet ist, an dessen bis an die Unterseite (25) des Mikrofluidikteils (12) ragenden Oberseite die weiteren Fluidanschlüsse (33) ausgebildet sind und an dessen Unterseite die mindestens eine weiteren mikro- und/ oder makrofluidische Einheit (31) fluidisch anschließbar ist.

13. Modulares Mikrofluidiksystem nach einem der vorangehenden Ansprüche, **dadurch gekennzeichnet, dass** zumindest eines der Verbindungsteile (14) auf seiner Oberseite noch weitere Fluidanschlüsse (44) und Befestigungsmittel (45) zum Anschluss einer Fluidik-Zusatzeinheit (20) aufweist.

14. Modulares Mikrofluidiksystem nach einem der vorangehenden Ansprüche, **dadurch gekennzeichnet, dass** für Endmodule (1, 8) in der Reihe der Module (1 bis 8) ein Fluidanschlussteil (42) zum Anschluss von externen Fluidleitungen (43) vorgesehen ist, das mittels des weiteren lösbaren Befestigungselements (18) an der Unterseite des Verbindungsteils (13) befestigbar ist und dabei die Verbindungskanäle (41) in dem Verbindungsteil (13) mit den externen Fluidleitungen (43) verbindet.

15. Modulares Mikrofluidiksystem nach einem der vorangehenden Ansprüche, **dadurch gekennzeichnet, dass** die plattenförmigen Mikrofluidikteile (12) jeweils mit einer die Randbereiche (22, 23) unbedeckt lassenden und an dem jeweiligen Modul (1 bis 8) lösbar befestigten Abdeckhaube (10) von oben abdeckbar sind.

16. Modulares Mikrofluidiksystem nach Anspruch 15, **dadurch gekennzeichnet, dass** die Verbindungsteile (13) jeweils mittels einer zwischen den Abdeckhauben (10) benachbarter Module (1 bis 8) einfügbaren weiteren Abdeckhaube (11) abdeckbar sind.

17. Modulares Mikrofluidiksystem nach Anspruch 16, **dadurch gekennzeichnet, dass** die weitere Abdeckhaube (11) oberhalb eines zum Anschluss einer Fluidik-Zusatzeinheit (20) auf dem Verbindungsteil (13) vorgesehenen Bereichs ein entfernbares Abdeckteil (19) aufweist.

## Claims

1. Modular microfluidic system having the following features:
- modules (1 to 8) of the microfluidic system are arranged next to each other in a row,
- each module (1 to 8) has a plate-shaped microfluidic part (12) whose underside (25) is supported in a locally limited area on a contact surface (29) of the module (1 to 8) and is forced against the latter by means of a releasable fastening element (15), whereby the microfluidic parts (12, 12') of respective adjoining modules (1 to 8) are located next to each other in one plane,
- each microfluidic part (12) contains a fluid channel system (40) with fluid connections (21) which are arranged on the upper side (16) of the microfluidic part (12) in edge areas (22, 23) relative to the potentially adjoining microfluidic parts (1 to 8),
- the fluid connections (21) of each two adjoining microfluidic parts (12, 12') are connected to one another by connecting channels (41) in a connecting part (13) which bridges the two microfluidic parts (12, 12') and is supported in the edge areas (22, 23) on their upper sides (16, 16'),
- in the opposite edge areas on the undersides (25, 25') of the two adjoining microfluidic parts (12, 12') is supported a clamping part (17) which is connected to the connecting part (13) by way of a further releasable fastening element (18) in the area between the two microfluidic parts (12, 12') and forces this against the upper sides (16, 16') of the two microfluidic parts (12, 12').

2. Modular microfluidic system according to claim 1, **characterised in that** the fastening element (15) consists of a screw which can be screwed in through an opening in the microfluidic part (12) into a screw thread (30) in the contact surface (29) of the module (1 to 8).

3. Modular microfluidic system according to claim 1 or 2, **characterised in that** the further fastening element (18) consists of a screw which can be screwed in through an opening in the connecting part (13) into a screw thread (38) in the clamping part (17).

4. Modular microfluidic system according to one of the preceding claims, **characterised in that** in the area between the two microfluidic parts (12, 12') the clamping part (17) has a further contact surface (34) for the connecting part (13), which is located at least approximately in the plane of the upper sides (16, 16') of the microfluidic parts (12, 12').

5. Modular microfluidic system according to one of the preceding claims, **characterised in that** the microfluidic part (12) and the module (1 to 8) have positioning means (26', 27') for aligning the microfluidic part (12) with respect to the module (1 to 8).

6. Modular microfluidic system according to one of the preceding claims, **characterised in that** the connecting part (13) and adjoining microfluidic parts (12, 12') to be bridged by it have further positioning means (26, 27) for aligning the connecting part (13) with respect to the two microfluidic parts (12, 12').

7. Modular microfluidic system according to claim 5 or 6, **characterised in that** the positioning means (26, 27) and/or further positioning means (26, 27) are implemented and/or arranged in accordance with a coding which allows only predefined combinations of microfluidic part (12) and module (1 to 8) or connecting part (13) and microfluidic part (12).

8. Modular microfluidic system according to one of the preceding claims, **characterised in that** in at least one of the modules (1 to 8) at least one further microfluidic and/or macrofluidic unit (31) can be mounted beneath the microfluidic part (12) in such a manner that further fluid connections (33) of the at least one further microfluidic and/or macrofluidic unit (31) outside of the locally limited area press against the underside (25) of the microfluidic part (12) and are thereby connected with additional fluid connections (37) of the microfluidic part (12) which are present there.

9. Modular microfluidic system according to claim 8, **characterised in that** in the case of a one-sided arrangement of the further fluid connections (33) of the at least one further microfluidic and/or macrofluidic unit (31) with respect to the contact surface (29) of the respective module (1 to 8) the latter has an auxiliary contact surface (39) on the opposite side at approximately the same distance from the contact surface (29).

10. Modular microfluidic system according to claim 8 or 9, **characterised in that** the contact surface (29) for the microfluidic part (12) is implemented on the upper side of an adapter plate (28) which is secured so as to be exchangeable on a housing (35) of the module (1 to 8) and on whose underside the at least one further microfluidic and/or macrofluidic unit (31) can be mounted.

11. Modular microfluidic system according to claim 10,
**characterised in that** the adapter plate (28) contains openings through which the further fluid connections of the at least one further microfluidic and/or macrofluidic unit (31) project as far as the underside (25) of the microfluidic part (12).

12. Modular microfluidic system according to claim 10, **characterised in that** on the adapter plate (28) between the microfluidic part (12) and the at least one further microfluidic and/or macrofluidic unit (31) is arranged in each case a fluid connection adapter (32), on whose upper side projecting as far as the underside (25) of the microfluidic part (12) are implemented the further fluid connections (33) and on whose underside the at least one further microfluidic and/or macrofluidic unit (31) can be fluidically connected.

13. Modular microfluidic system according to one of the preceding claims, **characterised in that** at least one of the connecting parts (14) has on its upper side yet further fluid connections (44) and fastening means (45) for the connection of a fluidic add-on unit (20).

14. Modular microfluidic system according to one of the preceding claims, **characterised in that** for end modules (1, 8) in the row of the modules (1 to 8) a fluid connection part (42) for the connection of external fluid lines (43) is provided which can be secured on the underside of the connecting part (13) by means of the further releasable fastening element (18) and thereby connects the connecting channels (41) in the connecting part (13) t the external fluid lines (43).

15. Modular microfluidic system according to one of the preceding claims, **characterised in that** the plate-shaped microfluidic parts (12) can in each case be covered from above by a protective cover (10) leaving the edge areas (22, 23) uncovered and secured in a releasable manner to the respective module (1 to 8).

16. Modular microfluidic system according to claim 15, **characterised in that** the connecting parts (13) can be covered in each case by means of a further protective cover (11) which can be inserted between the protective covers (10) of adjoining modules (1 to 8).

17. Modular microfluidic system according to claim 16, **characterised in that** the further protective cover (11) has a removable cover part (19) above an area provided for the connection of a fluidic add-on unit (20) on the connecting part (13).

## Revendications

1. Système microfluidique modulaire ayant les caractéristiques suivantes :
- des modules ( 1 à 8 ) du système microfluidique sont disposés les uns à côté des autres suivant une rangée,
- chaque module ( 1 à 8 ) a une partie ( 12 ) microfluidique en forme de plaque, qui s'applique par sa face ( 25 ) inférieure dans une région limitée localement sur une surface ( 29 ) d'appui du module ( 1 à 8 ) et est pressée contre celle-ci au moyen d'un élément ( 15 ) de fixation amovible, les parties ( 12, 12' ) microfluidiques de modules ( 1 à 8 ) voisins se trouvant les unes à côté des autres dans un plan,
- chaque partie ( 12 ) microfluidique comporte un système ( 40 ) de canal pour du fluide, ayant des raccords ( 21 ) pour du fluide qui sont disposés sur la face ( 16 ) supérieure de la partie ( 12 ) microfluidique dans des régions ( 22, 23 ) de bord par rapport aux parties ( 1 à 8 ) microfluidiques potentiellement voisines,
- les raccords ( 21 ) pour du fluide de deux parties ( 12, 12' ) microfluidiques voisines communiquent entre eux par des canaux ( 41 ) de liaison dans une partie ( 13 ) de liaison qui applique les deux parties ( 12, 12' ) microfluidiques à recouvrement sur leurs faces ( 16, 16' ) supérieures dans les régions ( 22, 23 ) de bord,
- dans les régions de bord opposées sur les faces ( 25, 25' ) inférieures des deux parties ( 12, 12' ) microfluidiques voisines s'applique une partie ( 17 ) de serrage qui dans la région entre les deux parties ( 12, 12' ) microfluidiques est assemblée par un autre élément ( 18 ) de fixation amovible à la partie ( 13 ) de liaison et la presse sur les faces ( 16, 16' ) supérieures des deux parties ( 12, 12' ) microfluidiques.

2. Système microfluidique modulaire suivant la revendication 1, **caractérisé en ce que** l'élément ( 15 ) de fixation est constitué d'une vis qui peut être vissée en passant par une ouverture de la partie ( 12 ) microfluidique dans un taraudage ( 30 ) de la surface ( 29 ) d'appui du module ( 1 à 8 ).

3. Système microfluidique modulaire suivant la revendication 1 ou 2, **caractérisé en ce que** l'autre élément ( 18 ) de fixation est constitué d'une vis qui peut être vissée en passant dans une ouverture de la partie ( 13 ) de liaison dans un taraudage ( 38 ) de la partie ( 17 ) de serrage.

4. Système microfluidique modulaire suivant l'une des revendications précédentes, **caractérisé en ce que** la partie ( 17 ) de serrage a, dans la région comprise entre les deux parties ( 12, 12' ) microfluidiques, une autre surface ( 34 ) d'appui de la partie ( 13 ) de liaison, surface qui se trouve au moins à peu près dans le plan des faces ( 16, 16' ) supérieures des parties ( 12, 12' ) microfluidiques.

5. Système microfluidique modulaire suivant l'une des revendications précédentes, **caractérisé en ce que** la partie ( 12 ) microfluidique et le module ( 1 à 8 ) ont des moyens ( 26', 27' ) de mise en position pour orienter la partie ( 12 ) microfluidique par rapport au module ( 1 à 8 ).

6. Système microfluidique modulaire suivant l'une des revendications précédentes, **caractérisé en ce que** la partie ( 13 ) de liaison et les parties ( 12, 12' ) microfluidiques voisines qui en sont recouvertes ont d'autres moyens ( 26, 27 ) de mise en position pour orienter la partie ( 13 ) de liaison par rapport aux deux parties ( 12, 12' ) microfluidiques.

7. Système microfluidique modulaire suivant la revendication 5 ou 6, **caractérisé en ce que** les moyens ( 26, 27 ) de mise en position et/ou les autres moyens ( 26, 27 ) de mise en position sont constitués/ou disposés suivant un codage qui n'autorise que des combinaisons prescrites de parties ( 12 ) microfluidiques et de modules ( 1 à 8 ) ou de parties ( 13 ) de liaison et de parties ( 12 ) microfluidiques.

8. Système microfluidique modulaire suivant l'une des revendications précédentes, **caractérisé en ce que** dans au moins l'un des modules ( 1 à 8 ) peut être montée au moins une autre unité ( 13 ) microfluidique et/ou macrofluidique en dessous de la partie ( 12 ) microfluidique de façon à ce que d'autres raccords ( 33 ) pour du fluide de la au moins une unité ( 31 ) microfluidique et/ou macrofluidique appuie à l'extérieur de la région limitée localement sur la face ( 25 ) inférieure de la partie ( 12 ) microfluidique et soient ainsi reliés aux raccords ( 37 ) pour du fluide supplémentaire qui y sont présents de la partie ( 12 ) microfluidique.

9. Système microfluidique modulaire suivant la revendication 8, **caractérisé en ce que** pour un agencement d'un seul côté des autres raccords ( 33 ) pour du fluide de la au moins une autre unité ( 31 ) microfluidique et/ou macrofluidique par rapport à la surface ( 29 ) d'appui du module ( 1 à 8 ), celui-ci a, à peu près à la même distance de la surface ( 29 ) d'appui, une surface ( 39 ) d'appui auxiliaire sur la face opposée.

10. Système microfluidique modulaire suivant la revendication 8 ou 9, **caractérisé en ce que** la surface ( 29 ) d'appui de la partie ( 12 ) microfluidique est constituée sur la face supérieure d'une plaque ( 28 ) d'adaptateur, qui est fixée de manière remplaçable sur un boîtier ( 35 ) du module ( 1 à 8 ) et sur la face inférieure de laquelle peut être montée la au moins une autre unité ( 31 ) microfluidique et/ou macrofluidique.

11. Système microfluidique modulaire suivant la revendication 10, **caractérisé en ce que** la plaque ( 28 ) d'adaptateur comporte des ouvertures par lesquelles les autres raccords pour du fluide de la au moins une autre unité ( 31 ) microfluidique et/ou macrofluidique vont jusqu'à la face ( 25 ) inférieure de la partie ( 12 ) microfluidique.

12. Système microfluidique modulaire suivant la revendication 10, **caractérisé en ce que** sur la plaque ( 28 ) d'adaptateur est disposé entre la partie ( 12 ) microfluidique et la au moins une autre unité ( 31 ) microfluidique et/ou macrofluidique respectivement un adaptateur ( 32 ) de raccord pour du fluide, sur le côté supérieur allant jusqu'à la face ( 25 ) inférieure de la partie ( 12 ) microfluidique duquel sont constitués les autres raccords ( 33 ) pour du fluide et sur le côté supérieur duquel la au moins une autre unité ( 31 ) microfluidique et/ou macrofluidique peut être raccordée fluidiquement.

13. Système microfluidique modulaire suivant l'une des revendications précédentes, **caractérisé en ce qu'**au moins l'une des parties ( 14 ) de liaison a, sur son côté supérieur, encore d'autres raccords ( 44 ) pour du fluide et moyens ( 45 ) de fixation de raccordement d'une unité ( 20 ) fluidique supplémentaire.

14. Système microfluidique modulaire suivant l'une des revendications précédentes, **caractérisé en ce que,** pour des modules ( 1, 8 ) d'extrémité dans la rangée des modules ( 1 à 8 ), il est prévu une partie ( 42 ) de raccord pour du fluide pour le raccordement de conduits ( 43 ) extérieurs pour du fluide, partie qui, au moyen de l'autre élément ( 18 ) de fixation amovible, peut être fixée au côté inférieur de la partie ( 13 ) de liaison et mettre ainsi en communication les canaux ( 41 ) de liaison de la partie ( 13 ) de liaison avec les conduits ( 43 ) extérieurs pour du fluide.

15. Système microfluidique modulaire suivant l'une des revendications précédentes, **caractérisé en ce que** les parties ( 12 ) microfluidiques en forme de plaque peuvent être recouvertes par le haut respectivement d'un capot ( 10 ) de recouvrement laissant découvertes les régions ( 22, 23 ) de bord et fixé de manière amovible aux modules ( 1 à 8 ) respectifs.

16. Système microfluidique modulaire suivant la revendication 15, **caractérisé en ce que** les parties ( 13 ) de liaison peuvent être recouvertes respectivement au moyen d'un capot ( 11 ) de recouvrement supplémentaire, pouvant être inséré entre les capots ( 10 ) de recouvrement de modules ( 1 à 8 ) voisins.

17. Système microfluidique modulaire suivant la revendication 16, **caractérisé en ce que** le capot ( 11 ) de recouvrement supplémentaire a une partie ( 19 ) de recouvrement, que l'on peut retirer et qui se trouve au-dessus d'une région prévue pour le raccordement d'une unité ( 20 ) fluidique supplémentaire sur la partie ( 13 ) de liaison.
